# EUROPEAN PATENT APPLICATION

(11) **EP 1 275 350 A2**
(43) Date of publication of application: **15.01.2003**
(21) Application number: 02425461.7
(22) Date of filing: 12.07.2002
(51) Int. Cl.: A61C 5/04

(54) **Endodontic apparatus and method for filling of prepared root canals**

(30) Priority: 13.07.2001 IT SA20010020
(71) Applicant: Borrelli, Marino, Salerno (IT)
(72) Inventor: Borrelli, Marino, Salerno (IT)

(57) **Abstract**

Apparatus with a kit of instruments for heating in copper and a kit of instrument in copper- berylium for filling tooth root channels and a new method that uses these instruments for a filling procedure for the application of a type of filling material for preventively prepared tooth root channels.

The technique results simple and sure and allows the clinician to get the hermetic closing of the root channel to the desired length .

## Description

### Relative technical field

This invention can be classified in the field of endodontic instruments used in the treatment of tooth root channels; in particular this invention is composed of an apparatus with a kit of instruments for heating and a kit of intrument for filling root channels and a new method that uses these instruments for a filling procedure for the application of a type of filling material for preventively prepared tooth root channels.

### Actual techniques in use today

As is well-known, a rubbery, natural material called gutta-percha, obtained from certain types of trees and then adequately purified, is used to fill root channels. Recently a mixture of this material together with other elements such as zinc oxide is being used as this gives better characteristics for this use.

The most common method of filling dental cavities with gutta-percha is to insert small quantities of heated gutta-percha into the cavity with a heated probe and compact the material in the cavity using a plugger. This procedure takes the dentist a long time and in the best of hypotheses it is tedious and in some cases the cavity is not perfectly filled and sealed.

Therefore the traditional techniques used for filling dental cavities do not insure that the root channel has been completely and accurately filled with the filling material.

Experience has shown that inaccurate filling of root channels is the major cause of failure of endodontic therapy.

Various problems and inconveniences are associated with the traditional techniques of vertical compacting of the filling material in a root channel, one of these, for example, is the risk that the final length of the plugger or the gutta-percha might be pushed beyond the end of the channel, or, and this can happen quite easily, the gutta-percha flows from the top towards the bottom (downwards) against the end of the channel rather than laterally, in such a way that perfect lateral filling of the channel cannot be carried out satisfactorily. It is also possible that the gutta-percha flows upwards between the plugger and the wall of the channel and pours out of the upper opening of the channel rather than flowing towards the end and laterally to fill the channel.

Many instruments are in use together with their relative methods for filling root channels, but all introduce drawbacks that the efficient filling of the channel making less sure, in fact such instruments don't succeed in making completely mouldable the gutta-percha, thus diminishing the certainty of an efficient filling. A first solution to the problem is given by Patent application PCT/IT00/00007 of the same applicant that adopts a copper tip to heat the gutta-percha that is introduced in the root channel to an already next temperature to that to make mouldable the guttapercha, and with Nickel-Titanium pluggers.

### Aims and advantages of this invention

The principal objective of this invention is to provide an apparatus and a method for heating and filling root channels with the aim of filling root channels faster and more efficiently in order to reduce both the time necessary to complete the technical application and to reduce the risk of incomplete filling of the root channel.

The technique described in the patent which refers to this invention represents a notable improvement of the aforementioned patent, overcoming all its inconveniences and limits.

This invention is composed of a kit of instruments for heating and a kit of intrument for filling root channels and a new method that uses these instruments for a filling procedure that eliminates the problems described above.

In particular the invention provides a technique for heating the gutta-percha inserted beyond the curve of the root channel, using a probe with an extremely flexible copper tip which is able to penetrate into the gutta-percha, to heat it and to modify its physical state along the final length of the channel, thus allowing the gutta-percha, which has now become softened, to be adapted to the shape of the end of the channel using a further tool with tip in Copper-Berylium which have the same characteristics of flexibility as the heated probe, to form a plug that will completely and hermetically isolate the inner part of tooth from the outer part.

### A description of the drawings

Further characteristics and advantages of this invention are shown in detail in the attached drawings, in one of the ways in which this invention can be carried out. These illustrations are indicative and not limiting:
Figure 1 is a schematic drawing of the heating apparatus and the copper tipped probe that forms a part of this invention.
Figure 2 is a sketch of the Copper-Berylium tips that is a further part of this invention.

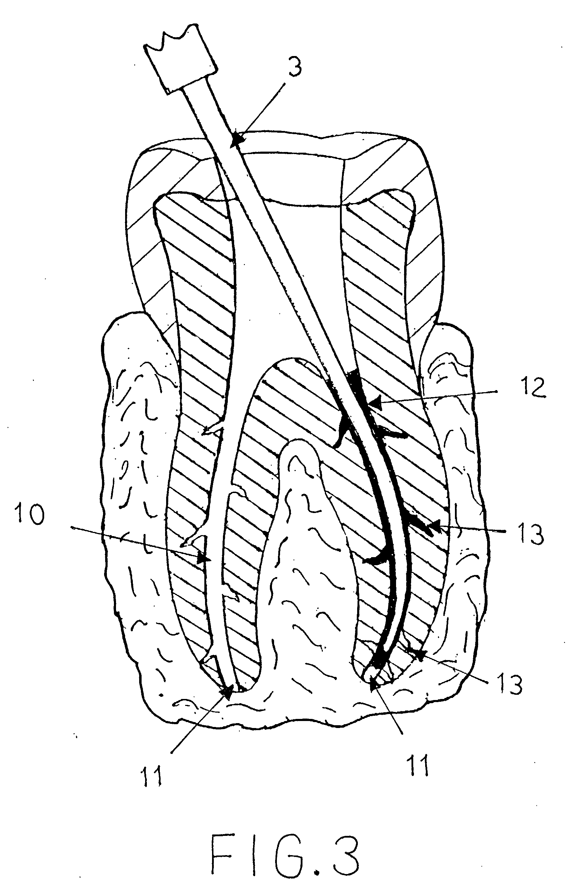

Figure 3 is a schematic drawing of the tip of the heating instrument inserted in the filling material (gutta-percha) contained in the curve of a root channel.

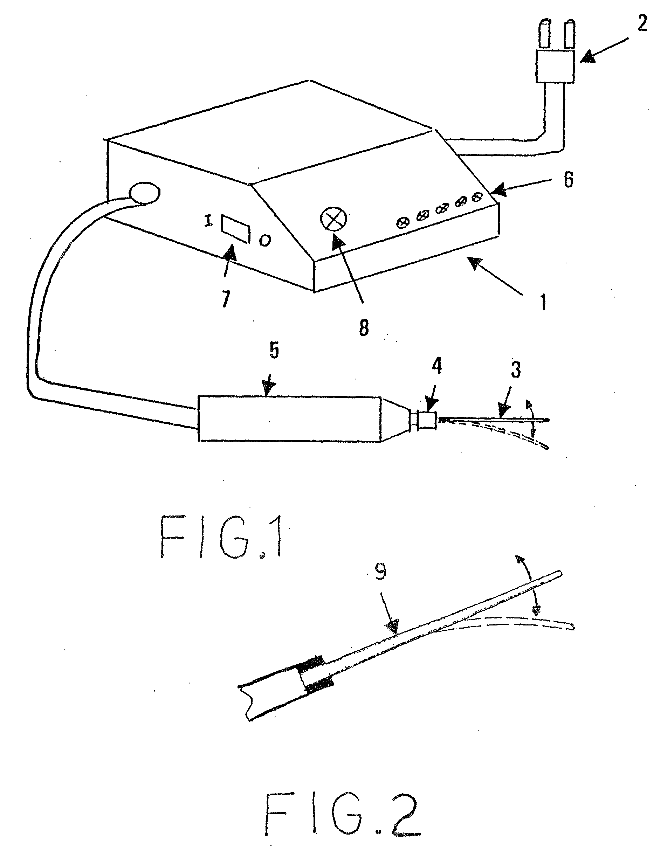

In reference to figure 1, (1) indicates the body of the container that contains the electronic and electric apparatus, (2) indicates the plug that connects the instrument to the power grid at 220V for battery recharge in the body, (3) indicates the copper tip, the body of which is cylindrical, smooth and tapered towards the adequately rounded tip ( gauge 0,30 mm. and taper 0,03 mm.), (4) indicates the electric resistance of the instrument that transforms the applied voltage into heat (from 0.00 °C to 200 °C), thus heating the tip (3) at 100-110 °C, (5) indicates the handle, (6) indicates the light emitting diodes that signal the temperature level reached by the tip (3), (7) indicates the on/off switch that is signalled by the light (8), (9) indicates a highly flexible Copper-Berylium tip to be used cold for compacting or adapting the gutta-percha at the end of the root channel.

Copper-Berylium tip has been realised in seven differently dimensions :
Copper-Berylium tip I: lenght 30 mm.; gauge 0,27 mm.; taper 0,04 mm.
Copper-Berylium tip II: lenght 30 mm.; gauge 0,30 mm. ; taper 0,04 mm.
Copper-Berylium tip III: lenght 30 mm.; gauge 0,30 mm. ; taper 0,06 mm.
Copper-Berylium tip IV: lenght 30 mm.; gauge 0,35 mm. ; taper 0,04 mm.
Copper-Berylium tip V: lenght 30 mm.; gauge 0,35 mm. ; taper 0,06 mm.
Copper-Berylium tip VI: lenght 30 mm.; gauge 0,40 mm. ; taper 0,04 mm.
Copper-Berylium tip VII: lenght 30 mm.; gauge 0,50 mm. ; taper 0,06 mm.

The tip (3) has been realised in such a way as to sustain the temperature necessary to soften the filling material so that it will fill the root cavities efficiently and easily.

The tip (3) is made of an annealed, non-alloy copper, which, thanks to its high level of conductivity allows the immediate transformation of the applied voltage into heat, thus consenting this tip to be easily handled thanks to the characteristics of flexibility of the metal, which, when introduced into a root channel, follows its curved route, whatever form this takes, in such a way as to facilitate access to the ends of the root channels, which would otherwise be inaccessible.

The tip (3) is made in two different dimensions : lenght 23 mm. and lenght 28 mm.

### Methods for carrying out this invention

After the crown of the tooth has been opened, the length of the root channel is measured (10), a series of delicate, flexible instruments of ever increasing diameter are used to clean and to free the channel from the pulp as practically as possible and to shape the root channel (10).

Once the channel has been prepared a series of operations, essentially measurements, are carried out:
a) the cone of gutta-percha is chosen in such a way that it can be positioned at a distance of 1mm. from the end of the root channel (11);
b) the previously heated heat carrying tip (3) is positioned at a distance of 4mm. from the end of the root channel;
c) the cold tip (9) of the Copper-Berylium apparatus is positioned at a distance of 3mm. from the end of the root channel.

When the rubber stoppers have been positioned at these measurements, the therapy can be begun:
using the heated tip (3), the upper part of the cone of gutta-percha is taken away, the heated tip (3) is then inserted for 4-5-6 mm. into the cone of gutta-percha (12), while a temperature of increasing increase provokes a heat increase of the same till that the equipment does not evidence with a sonorous or bright signal that the temperature has reached the degrees of 100-110°C to make the gutta-percha completely moulded in the medium third of the root-channel; the heated tip (3) is then withdrawn without dragging the gutta-percha behind it. In the space left by the heated tip (3), introduced and retreat, is inserted the adapted cold tip for dimension to the medium third to compact laterally and vertically the gutta-percha that penetrates in the possible accessory channels there presents. The (cold tip) plugger for approximately ten second ones is withheld in position, therefore is brought it out of the root channel. The cold tip retreat leaves surges a void in the gutta-percha mass of up to the medium third of root-channel. At this point the cold tip (9) with facility can be pushed into the empty space left by the tip (3) while this is heated up; the increasing increase of heat makes that exercising a small pressure, the same one reaches 4 mm. from the work lenght. It is attended in this position that the heated tip make to reach the effective temperature of 100-110°C in the gutta-percha mass and evidenced by equipment. Into the empty space left by the heated tip, introduce the adapted cold tip to the space of third apex one exercising pressure up to reaching 3 mm. from the work lenght to compact and to inject the gutta-percha, yield previously completely moulded, in the whole endodontic space to create a hermetic seal. The plugger in position is withheld for approximately ten second and therefore it is retreat. Into the empty space left by the withdrawn cold tip a cone of the same dimensions is introduced, therefore it is heated and compacted for definitively closing the whole endodontic space.

The great innovative advantage of this invention as proposed in this description, consists in:
a) proposing tips in annealed non-alloy copper (3) to heat the gutta-percha in the root channel,
b) the method for a combined use of the copper tips (3), which are an optimum heat conductors and therefore capable of heating the gutta-percha in a shorter time and at a lower temperature, from 100° to 110°C. compared to the inventions using the preceding technique, also its notable flexibility allows it to adapt itself to the curved root channel of the tooth, in all conditions reaching the last millimeters of the third apex of the root channel, and of the Copper-Berylium tips (9) which forms a highly flexible pluggers or instruments used to adapt the shape of the gutta-percha untill to end of the root channel; and besides the fact that the progressive heating of the tip bring to an increasing increase of the heat surrendered to the gutta-percha according to a flow; in fact to contact with the gutta-percha the tips (3) are surrenders increasing flows of heat that the gutta-percha assumes and add together and it distributes along the 4 mm. of length of his mass, in such way that the guttahpercha rendered plastic in the last millimeters of the root channel can be injected and closing off any lateral channels of the root channel .

From what has been described and illustrated above, it can be seen that this invention fulfils the aims described as it proposed to do.

All the details may be substituted by other equivalent elements, in practise the materials, the dimensions and the shapes of the container (1) can be varied, as can the electronic cards and signalling elements contained in it as well as the size and shape of the handle (5).

## Claims

1. An apparatus composed of a container (1) with electronic and electric control and command circuits connected to the power grid, a handle (5), associated to an electric resistance (4), **characterised by** a kit of instruments, constituted from highly flexible and conductivity copper tips, for heating in a controlled way, thus reaching progressively the right temperature of the copper tips and according to an equivalent progressive heat transfer, a filling material, the gutta-percha, to become completely mouldable to necessary temperature of 100-110°C in any tooth root chanel and it can be compacted up to distance of 3 mm from the top of the root chanel by means of a kit of highly flexible copper-berylium tips.

2. An apparatus as described in claim 1), in which the annealed, non-alloy copper tip (3) has a cylindrical, smooth body that is tapered along its longitudinal axis of lenght 23 mm right up to the tip, which is adequately rounded, with gauge 0,30 mm. and taper 0,03 mm .

3. An apparatus as described in claim 1) and 2), in which the annealed, non-alloy copper tip (3) has a lenght 23 mm.

4. An apparatus as described in claim 1), **characterised by** the fact that copper-Berylium tip (9) has been realised in seven differently dimensions :
Copper-Berylium tip I: lenght 30 mm.; gauge 0,27 mm.; taper 0,04 mm.
Copper-Berylium tip II: lenght 30 mm.; gauge 0,30 mm. ; taper 0,04 mm.
Copper-Berylium tip III: lenght 30 mm.; gauge 0,30 mm. ; taper 0,06 mm.
Copper-Berylium tip IV: lenght 30 mm.; gauge 0,35 mm. ; taper 0,04 mm.
Copper-Berylium tip V: lenght 30 mm.; gauge 0,35 mm. ; taper 0,06 mm.
Copper-Berylium tip VI: lenght 30 mm.; gauge 0,40 mm. ; taper 0,04 mm.
Copper-Berylium tip VII: lenght 30 mm.; gauge 0,50 mm. ; taper 0,06 mm.

5. A filling technique for any type of tooth root channel, featuring the combined use of a device which allows to control the heating up, thus reaching progressively the right temperature directly in the tooth channel, of a kit of non-alloy non-refined copper tips (3) flexibles enough to adapt to the winding channel and to reach, in any winding condition, the distance of 4 mm from the top of the channel, to the temperature of 100 - 110°C necessary for a material, inserted in the root channel, namely gutta-percha, to become completely mouldable, having absorbed heat in the same progressive fashion as tip (3), and of a high flexibility device with a kit of copper-beryllium tips (9) to be used as a cold compactors or adaptors of the gutta-percha up to the distance of 3 mm from the top of the root channel.
